# EUROPEAN PATENT APPLICATION

(11) **EP 4 795 938 A1**
(43) Date of publication of application: **26.08.2026**
(21) Application number: 26158445.2
(22) Date of filing: 13.02.2026
(51) Int. Cl.: A23G 9/08, A23G 9/12, A23G 9/30

(54) **IMPROVED MACHINE FOR MAKING ICE CREAM IN PORTIONS**

(30) Priority: 25.02.2025 IT 202500003621
(71) Applicant: Bravo, Francesco, 36075 Montecchio Maggiore (VI) (IT)
(72) Inventor: Bravo, Francesco, 36075 Montecchio Maggiore (VI) (IT)
(74) Representative: Praxi Intellectual Property Milano

(57) **Abstract**

A machine for producing ice cream in portions, of the type comprising a compressor (2) for refrigerant liquid inside a refrigeration coil (9), and a motor (3) driving a blade mixer (4) for forming an ice cream mixture. Specifically, the machine of the invention is provided with a device (5) for mixing a mixture of ice cream powder (17) and water flow (19) and for creaming the ice cream (23), by means of the rotation of the blade mixer (4) rotatably arranged inside the same device (5). Compared to traditional machines for the production of ice cream in portions, the invention offers the advantage of ensuring, in a simple and economical way, the best conditions for the naturalness of the final food product, without the risk of bacterial contamination from the mixing chamber.

## Description

### BACKGROUND OF THE INVENTION

The present invention concerns an improved machine for the production of ice cream in portions.

The field of the invention is that of machines used for the preparation of ice cream, of the type equipped with a mixer for mixing the starting powder preparation with water, so as to obtain a mixture which, subsequently and immediately after the mixing phase, is conveyed into a suitable cooled creamer, adaped for making the amalgam from which the final product is obtained.

However, the use of the ingredient mixer, which is separate from the ice cream creamer, has the disadvantage of presenting risks of bacterial proliferation in the residues that are deposited on its walls, which, in subsequent processing, are transferred to the product to be consumed, with obvious dangers to the health of the user.

### SUMMARY OF THE INVENTION

The main aim of the present invention is to provide a new machine for producing ice cream which, compared to traditional machines, is able to guarantee, in a simple and economical way, the best conditions for the naturalness of the final product, without bacterial contamination.

These and other objects are achieved with the machine of claim 1. Preferred embodiments of the invention are set out in the remaining claims. Thanks to the elimination of the traditional mixer, the machine of the invention offers the advantage of eliminating a dangerous source of bacterial proliferation and, in general, contamination of ice cream intended for consumption. In this way, the best conditions for the naturalness of the final food product are ensured in a simple and economical way, without the risk of bacterial contamination from the mixing chamber.

### BRIEF DESCRIPTION OF THE DRAWINGS

These and other objects, advantages and characteristics are evident from the following description of a preferred embodiment of the machine of the invention, illustrated by way of non-limiting example in the figures of the attached drawings sheets.

In these:
- Figure 1 shows the machine of the invention in side section view;
- Figure 2 shows the machine of Figure 1 in its initial position for loading the capsule containing the starting food product powder;
- Figure 3 shows the initial phase of transport of the capsule of the machine in Figure 1 towards the lid opening station;

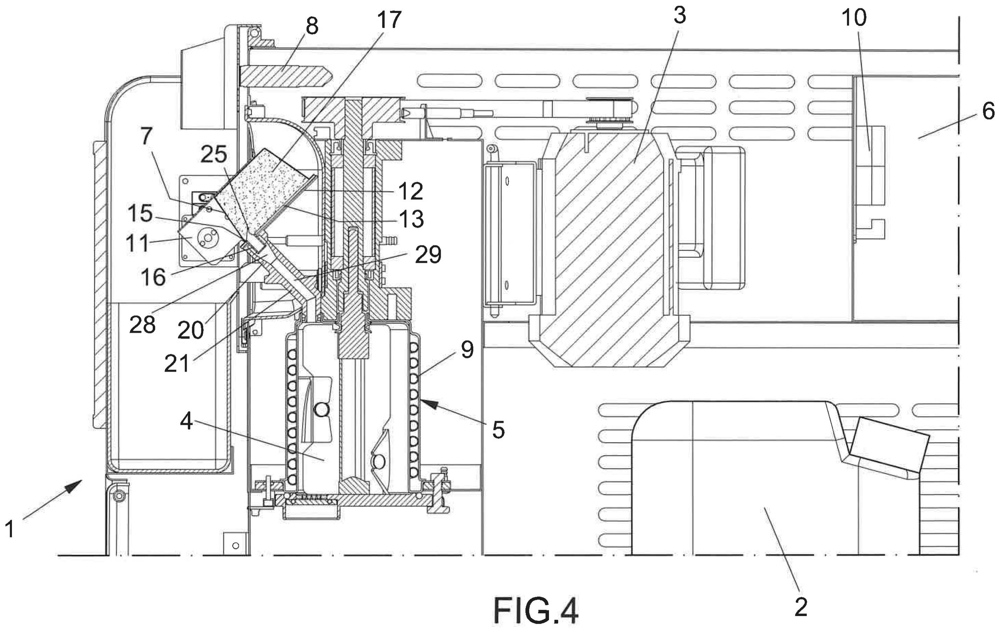

- Figure 4 shows the machine of the previous figures in the position for cutting the lid of the capsule containing the starting powdered product;
- Figure 5 shows an exploded view of the detail of the duct system forming and transferring the mixture of powder and water to the mixing-creaming device of the machine shown in the previous figures;
- Figure 6 shows a variant configuration of the end of the duct system shown in Figure 5;

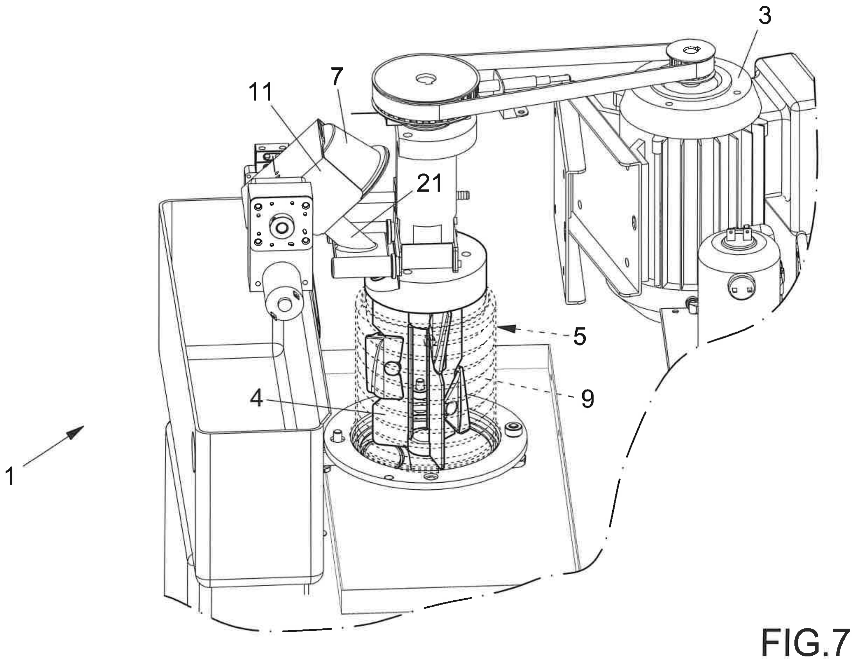

- Figure 7 shows a perspective view of the machine of the invention; and

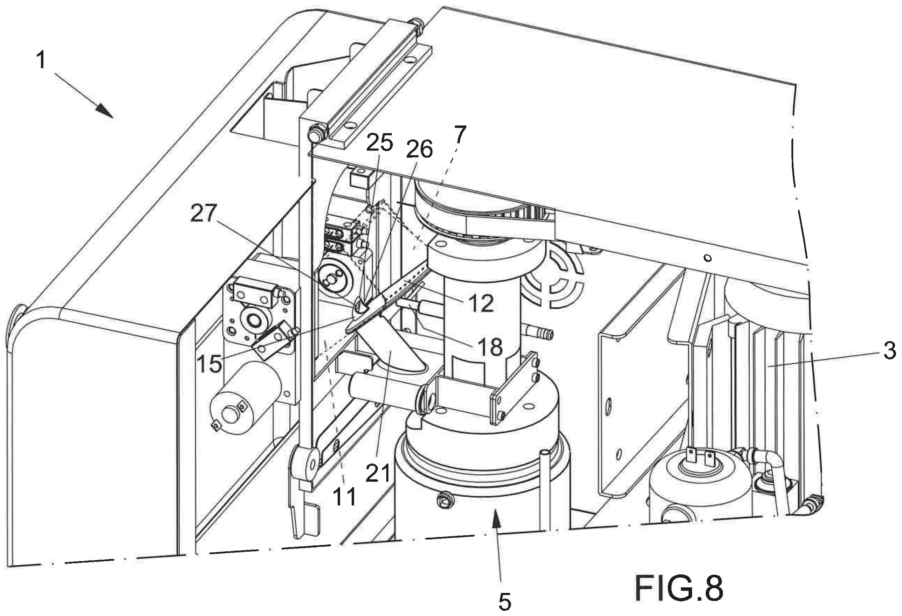

- Figure 8 shows an enlarged view of the top part of the machine shown in Figure 7.

### DETAILED DESCRIPTION OF THE PREFERRED EMBODIMENTS

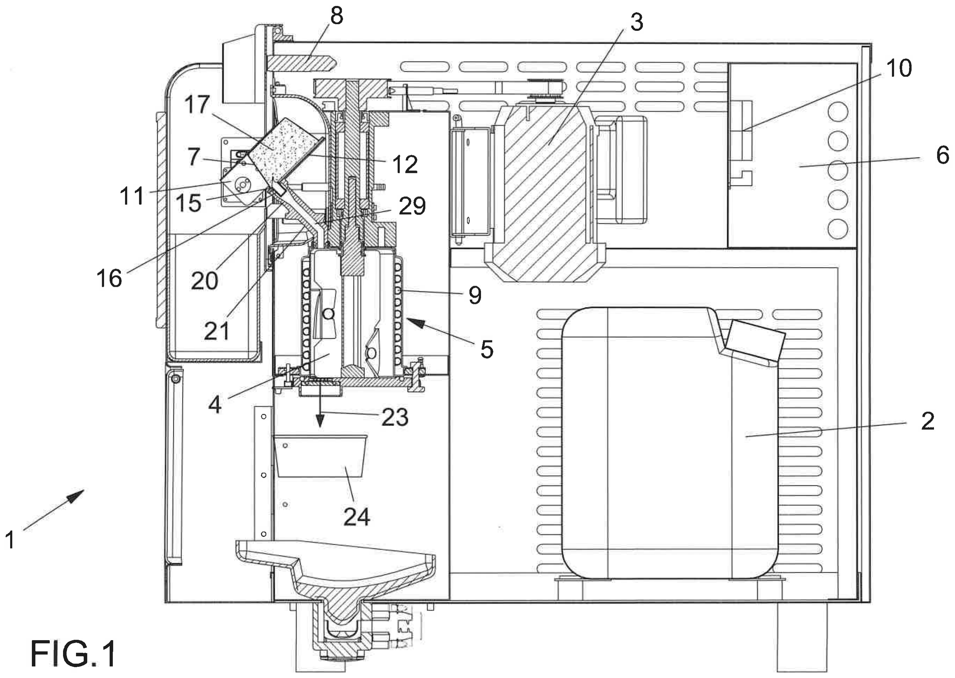

The machine of the invention, indicated as a whole with numeral 1 in Figure 1, comprises a compressor 2 and a motor 3 for rotating a blade mixer 4 of the mixing-creaming device 5. An electronic control system 6 for controlling the functions of the machine 1 is also provided. The ice cream powder 17, preferably in the form of granules that are rapidly soluble in water, is contained inside a capsule 7 closed by a lid 13.

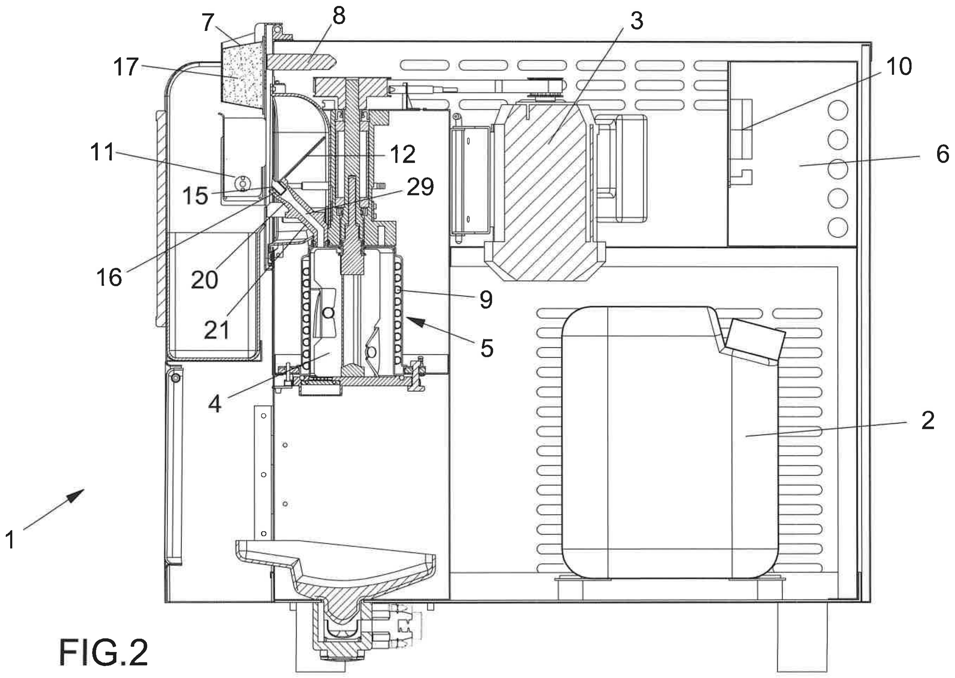

In the initial loading position of the capsule 7 inside the rotating lever 11 shown in Figure 2, an optical reader 8 reads the type of ice cream starting powder 17 (strawberry flavour, cream flavour, and the like), for example reproduced on the label applied to a wall of the capsule 7.

Based on this reading, the electronics 6 control the temperature of the cooling coil 9 of the mixing-creaming device 5, and adjust the time and speed of rotation of the blade 4 rotatably mounted inside the same device 5. The same electronics 6 are also equipped with a volumetric meter 10 for adjusting the amount of water used to dissolve the ice cream powder 17.

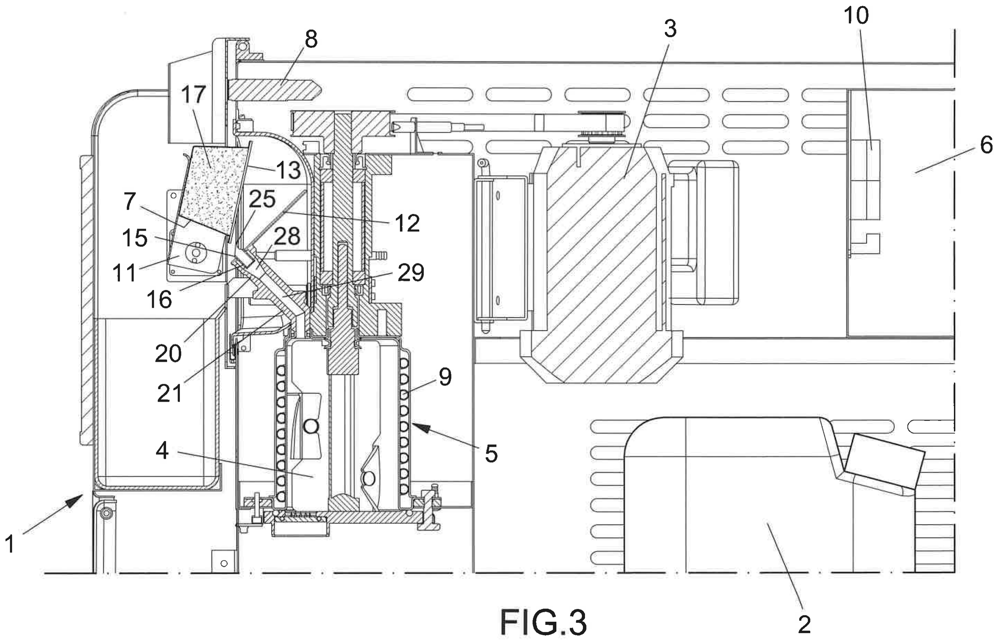

In its initial position on the machine 1, shown in Figure 2, the capsule 7 is manually inserted into a lever 11 which, by means of the motor 3 and a respective kinematic connection, not shown, is rotated in the direction of the arrow in Figure 3, until the lid 13 of the capsule 7 abuts a stop wall 12.

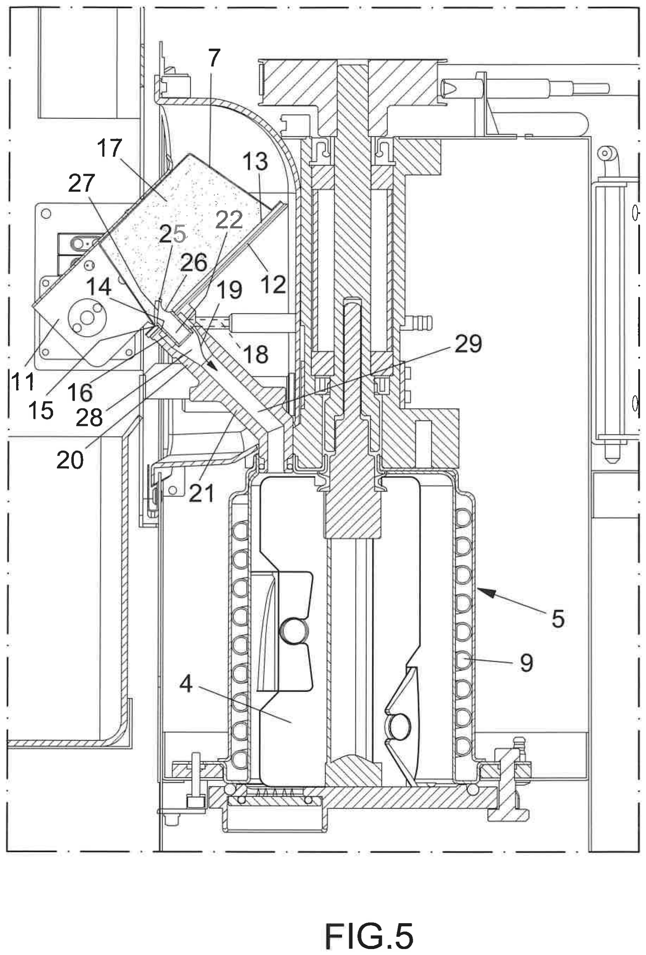

As better shown in Figure 5, the wall 12 stopping the rotation of capsule 7 has an opening 14 for housing the top end 15 of a duct 16. Said end 15 has a sharp edge, suitable for cutting and opening the lid 13 of the capsule 7 when the latter is forced to abut the stop wall 12, so as to allow the powder 17 to fall and be transferred into the channel 22 of the duct 16.

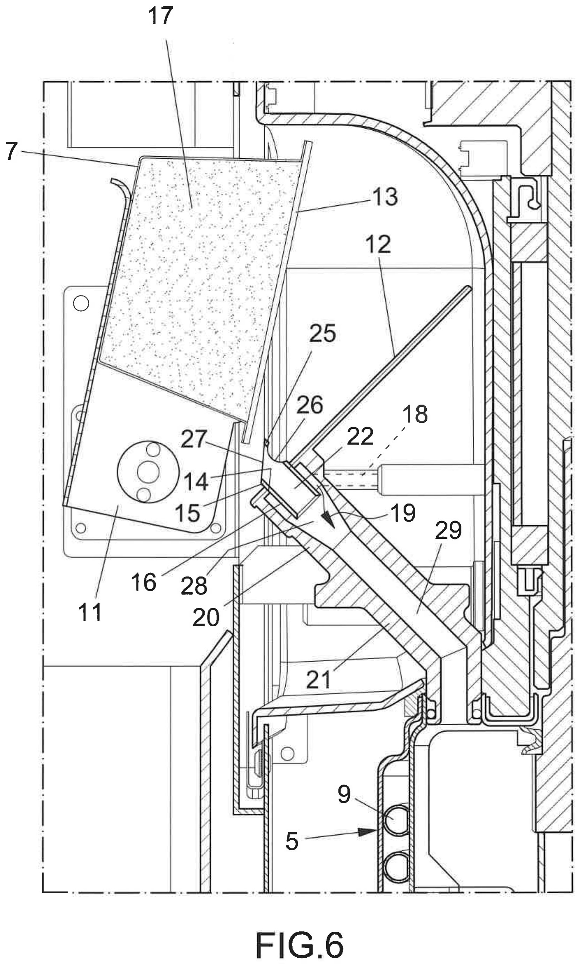

In the variant shown in Figure 6, the aforementioned top end 15 of the duct 16 has a protrusion 25 substantially shaped like a 'C' or a curl, which serves to hold up the portion of the lid 13 that has been cut off, so as to prevent it from obstructing the free access of the powder 17 into the duct 16. Advantageously, the end 15 with the curl 25 also has two openings, a side opening 26 and a top opening 27, respectively, for the entry of the powder 17 into the channel 22, so that the entire quantity of powder packaged inside the capsule 7 can be collected.

At the duct 16 described above, the machine of the invention has a conduit 18 for a water flow 19, controlled by the volumetric meter 10 in quantities suitable for dissolving the ice cream powder 17 and which flows downwards, washing over the outer surface of the duct 16.

Downstream or below the latter, a conical fitting 20 is provided, which also has a channel 28 similar to channel 22 of the duct 16, so as to create a first contact between the powder 17 and the water flow 19 inside it. The mixture thus formed is transferred into the channel 29 of the underlying duct 21 and, from there, into the mixing-creaming device 5.

Advantageously, the duct 21 is in contact with the body of device 5, which is cooled by means of the coil 9. This creates a thermal bridge thanks to which the system, consisting of the ducts 16, 21 and conical fitting 20, is brought to a cooling temperature that prevents bacterial proliferation on any residues accidentally left inside the system.

In the operation of the machine according to the invention, when the lever 11 has brought the capsule 7 to its end-of-stroke position abutting the stop wall 12 (detected by a suitable sensor, not shown), the end 15 of the duct 16 protruding above the opening 14 of the same wall 12 breaks the lid 13 of capsule 7, allowing the powder 17 to fall into the channel 22 of duct 16.

At the same time, the volumetric meter 10 controls the delivery of the desired quantity of water 19 through the duct 18, based on the data detected by the reader 8 on the capsule 7 and under the control of the electronics 6.

The water that settles on the outer wall of duct 16 then falls into the channel 28 of the conical fitting 20, inside which it contacts the powder 17, thus initiating the formation of a mixture, which first passes through the channel 29 of duct 21 and finally falls into the mixing-creaming device 5.

The movement of the blade 4 performs creaming of the ice cream, by rotating at a speed, for a duration and at a temperature that are controlled by the electronics 6, until the ice cream 23 is produced, which is then dropped into a respective cup 24 (Figure 1).

The invention, as described above and depicted in the accompanying drawings, may be modified to produce variants that nevertheless fall within the scope of the following claims.

For example, the mechanism moving the capsule 7 towards the sharp end 15 cutting the lid 13 could be different.

## Claims

1. Machine for producing ice cream in portions, of the type comprising a compressor (2) for a refrigerant liquid inside a refrigeration coil (9), and a motor (3) driving a blade mixer (4) for forming an ice cream mixture, comprising a device (5) for mixing a mixture of ice cream powder (17) and water flow (19) and for creaming the ice cream (23) by means of the rotation of said blade mixer (4) rotatably arranged inside the same device (5), **characterised in that** it also comprises an assembly of ducts (16, 21) and conical fitting (20) for transferring said ice cream powder and water from a capsule (7) closed by a lid (13) containing said powder, to the inside of said device (5).

2. Machine according to claim 1, **characterised in that** said duct (16) has an end (15) cutting and opening said lid (13) of the capsule (7), for collecting said powder (17) and transferring it into the channel (22) of said duct (16).

3. Machine according to claim 2, **characterised in that** said end (15) of the duct (16) has a protrusion (25) substantially shaped like a 'C' or a curl, which serves to hold up the portion of the cover (13) that has been cut off, with two openings, one side opening (26) and one top opening (27), respectively, being formed on the same end (15) for the entry of the powder (17) into the channel (22) of the duct (16).

4. Machine according to claim 3, **characterised in that** it also comprises a conduit (18) for conveying a water flow (19) against the outer surface of said duct (16).

5. Machine according to claims 2 or 3, **characterised in that** it also comprises a rotary lever (11) supporting said capsule (7) and a stop wall (12) stopping the movement of the rotary lever (11) at the position for cutting the lid (13) of the capsule by means of said end (15) of the duct (16), said wall (12) having an opening (14) for housing said end (15) of the duct (16).

6. Machine according to claim 1, **characterised in that** said duct (21) is connected and contacted with the mixing and creaming device (5), forming a thermal bridge between the latter and said assembly of ducts (16, 21) and conical fitting (20).

7. Machine according to claim 1, **characterised in that** it comprises a label optical reader (8) which recognises the type of ice cream powder packaged inside said capsule (7).

8. Machine according to claim 4, **characterised in that** it also comprises a volumetric meter (10) for controlling the quantity of water in said conduit (18).

9. Machine according to claim 8, **characterised in that** it also comprises electronics (6) for controlling the time and temperature of ice cream formation inside said device (5) and for controlling said volumetric meter (10).
